# EUROPÄISCHE PATENTSCHRIFT

(11) **EP 1 519 823 B1**
(45) Veröffentlichungstag und Bekanntmachung des Hinweises auf die Patenterteilung: **21.11.2007**
(21) Anmeldenummer: 03730026.6
(22) Anmeldetag: 14.05.2003
(51) Int. Cl.: B29C 47/68, B29B 13/10, B01D 33/46, B01D 33/06

(54) **VORRICHTUNG ZUM KONTINUIERLICHEN FILTERN VON MATERIALGEMISCHEN**
DEVICE FOR THE CONTINUOUS FILTRATION OF MATERIAL BLENDS
SYSTEME POUR FILTRER EN CONTINU DES MELANGES DE MATIERES

(30) Priorität: 29.06.2002 DE 10229406
(43) Veröffentlichungstag der Anmeldung: 06.04.2005
(73) Patentinhaber: Ettlinger Kunststoffmaschinen GmbH, 86343 Königsbrunn (DE)
(72) Erfinder: ETTLINGER, Roderich, 86179 Augsburg (DE)
(74) Vertreter: Schwarz, Thomas
(86) Internationale Anmeldenummer: PCT/EP2003/005015
(87) Internationale Veröffentlichungsnummer: WO 2004/002715

(56) Entgegenhaltungen:
- EP-A- 0 411 163
- WO-A-00/47394
- DE-A- 2 324 581
- DE-A- 2 947 673
- US-A- 4 470 904
- US-A- 5 330 647
- US-B1- 6 378 705

## Beschreibung

Die Erfindung betrifft eine Vorrichtung zum kontinuierlichen Filtern von Materialgemischen, insbesondere zur Abtrennung von Verunreinigungen aus Kunststoffschmelzen, nach dem Oberbegriff des Anspruchs 1.

Gebrauchte Kunststoffe oder Kunststoffabfälle weisen üblicherweise hohe Anteile an Fremdstoffen, wie z.B. Metallteile, Papierreste, Glas, Sekundärkunststoffe und dgl. auf. Diese Fremdstoffe oder Verunreinigungen müssen vor der Wiederverwertung der Kunststoffe in der Regel entfernt werden. Dies erfolgt vielfach dadurch, daß die gebrauchten Kunststoffe durch Erwärmung zunächst plastifiziert werden und die Kunststoffschmelze anschließend filtriert wird. Hierfür werden sogenannte Schmelzefilter eingesetzt, durch welche die metallischen oder nichtmetallischen Fremdstoffe oder höherschmelzende Kunststoffe abgetrennt werden. Um eine kontinuierliche und störungsfreie Filtrierung zu ermöglichen, müssen die Schmelzefilter jedoch ständig gereinigt werden.

Aus der DE 43 08 685 C2 ist eine Trennvorrichtung bekannt, bei der die verschmutzte Kunststoffschmelze in den Innenraum eines in einem Gehäuse angeordneten hohlzylindrischen Filterkörpers gepreßt wird. In dem Innenraum des Filterkörpers ist eine zu diesem koaxiale drehangetriebene Schaberwelle angeordnet, die mit der Innenwand des Filterkörpers einen inneren Ringraum begrenzt und an ihrer Außenseite mehrere, schräg zur Achsrichtung verlaufende und sich zu einer Schneckenwendel ergänzende Schaber trägt. Die von dem Filterkörper an seiner Innenseite zurückgehaltenen Rückstände werden von den Schabern abgestreift und durch die Rotation der Schaberwelle zu einem dem Einlaßende des inneren Ringraums axial gegenüberliegenden Materialauslaß längs des Filterkörpers transportiert. Bei dieser Ausführung verläuft der Transportweg für die Abführung der Rückstände jedoch über die gesamte Innenfläche des Filters, was besonders bei harten und abrasiven Rückständen zu schnellen Verschleißerscheinungen des Filterkörpers führen kann. Aufgrund des axialen Bewegung der Rückstände entlang des Filters kann es außerdem zu Verstopfungen der Filteröffnungen kommen. Darüber hinaus ist der Filterkörper bei dieser bekannten Trennvorrichtung durch eine konstruktiv aufwendige Stützanordnung am Gehäuse abgestützt.

Aus der DE 32 39 030 A1 ist eine weitere Trennvorrichtung zur Wiederaufbereitung von Gemischen aus thermoplastischem Kunststoff und Materialabfällen bekannt. Dort befindet sich im Innenraum eines hohlzylindrischen Filterkörpers ebenfalls eine drehangetriebene Schaberwelle, die an ihrem Außenumfang axial und in Umfangsrichtung gegeneinander versetzte Schaber trägt. In dem Filterkörper sind einander gegenüberliegende, schlitzförmige Auslaßöffnungen vorgesehen, zu denen die sich an der Innenseite des Filterkörpers sammelnden Rückstände von den Schabern durch hin und hergehende Drehbewegung der Schaberwelle transportiert werden. Auch dort werden jedoch die Rückstände bei ihren Transport zu den beiden Auslaßöffnungen relativ lange an der Filterinnenwand entlang bewegt.

Aus der US-B1-6 378 705 ist eine gattungsgemäße Vorrichtung bekannt.

Aufgabe der Erfindung ist es, eine Vorrichtung der eingangs genannten Art zu schaffen, die eine möglichst schnelle Entfernung der abgetrennten Rückstände von der Oberfläche des Filters ermöglicht.

Diese Aufgabe wird durch eine Vorrichtung mit den Merkmalen des Anspruchs 1 gelöst. Zweckmäßige Weiterbildungen und vorteilhafte Ausführungsformen der Erfindung sind in den Unteransprüchen angegeben.

Ein wesentlicher Vorteil der erfindungsgemäßen Vorrichtung besteht darin, daß die Filterrückstände von der Filteroberfläche abgehoben werden, ohne weiter das Filter zu berühren. Die Rückstände werden bei der Reinigung nicht auf der Oberfläche des Filters entlanggeschoben, so daß der Verschleiß verringert und die Standfestigkeit der Vorrichtung verbessert werden kann. Durch die geringeren abrasiven Beanspruchungen des Filters können auch einfacher aufgebaute und kostengünstigere Filter verwendet werden.

Ein einfach herstellbares Filter besteht aus einem mit einer Vielzahl von Durchgangsöffnungen versehenen Filterrohr, das von einem Stützkörper abgestützt wird. Das Filterohr besteht zweckmäßigerweise aus einem verschleißbeständigen Material, das auch mit einer zusätzlichen Beschichtung versehen sein kann. Die Durchgangsöffnungen weisen in vorteilhafter Weise einen sich in Strömungsrichtung erweiternden Querschnitt auf und können z.B. durch Elekronenstrahl- oder Laserbearbeitung erzeugte konische Bohrungen sein. Der Stützkörper besteht verzugsweise aus einem Hohlzylinder, der an seiner Auflageseite für das Stützrohr mehrere umlaufende Sammelnuten mit dazwischenliegenden schmalen Auflagestegen enthält. Dadurch wird ein preisgünstiges Filter mit einer großen offenen Filterfläche ermöglicht. Das Filter ist äußerst verschleißfest und kann bei Bedarf einfach ausgetauscht werden.

Das durch den Abstreifer abgehobene Material wird zweckmäßigerweise durch eine Fördervorrichtung abtransportiert. Das Filter und die Fördervorrichtung sind getrennt antreibbar, so daß eine getrennte Regelung von Reinigungs- und Fremdstoffaustragegeschwindigkeit ermöglicht wird. Durch eine derartige Regelung kann eine sehr hohe Fremdstoffkonzentration und somit eine hohe Ausbeute des Primärmaterials erzielt werden. Die Fördervorrichtung besteht in einer zweckmäßigen Ausführung aus einer motorisch drehangetriebenen Förderschnecke. Die Drehzahlen des Filters und der Förderschnecke sind getrennt steuerbar, wodurch eine sehr hohe Störstoffkonzentration bei einer optimalen aktiven Filterfläche erreicht werden kann. Je nach Kunststoffart können das Filter und die Förderschnecke gleiche oder entgegengesetzte Drehrichtungen aufweisen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein erstes Ausführungsbeispiel einer Trennvorrichtung in einem Längsschnitt;
- **Figur 2**: einen Querschnitt der Trennvorrichtung von Figur 1;
- **Figur 3**: einen Querschnitt eines zweiten Ausführungsbeispiels einer Trennvorrichtung;
- **Figur 4**: einen Querschnitt eines dritten Ausführungsbeispiels einer Trennvorrichtung;
- **Figur 5**: ein erstes Ausführungsbeispiel eines Filterkörpers in einem Quer- und Längsschnitt und
- **Figur 6**: eine zweites Ausführungsbeispiel eines Filterkörpers in einem Quer- und Längsschnitt.

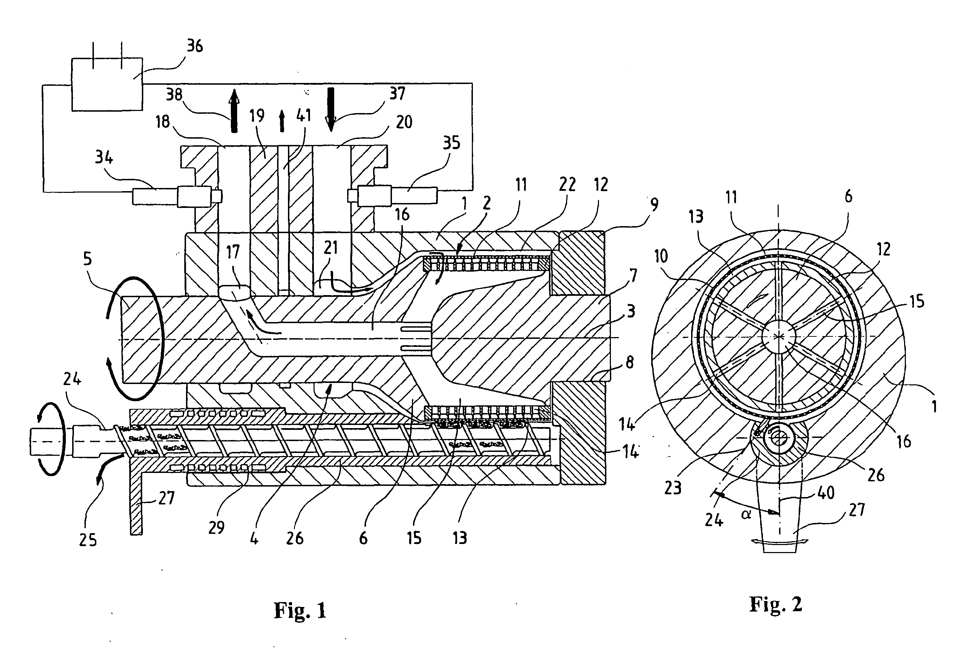

Die in Figur 1 schematisch dargestellte Trennvorrichtung zum Filtern verunreinigter Kunststoffschmelzen enthält ein Gehäuse 1, in dem ein hohlzylindrischer Schmelzefilter 2 um eine Drehachse 3 drehbar angeordnet ist. Der Schmelzefilter 2 ist auf einer motorisch drehangetriebenen Trägerwelle 4 montiert. Diese enthält einen im Gehäuse 1 gelagerten schlankeren Antriebsteil 5, einen verbreiterten Aufnahmeteil 6 für den Schmelzefilter 2 und einen schlankeren Lagerzapfen 7, der in einer entsprechenden Bohrung 8 eines am Gehäuse 1 befestigten Lagerdeckels 9 drehbar gelagert ist.

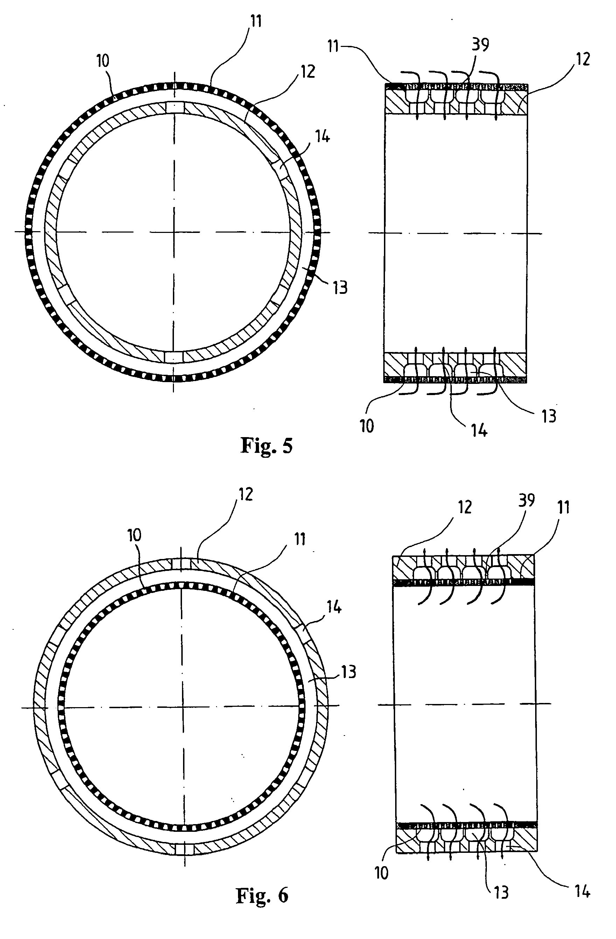

Der in Figur 5 vergrößert dargestellte Schmelzefilter 2 besteht aus einem mit einer Vielzahl radialer Durchgangsöffnungen 10 versehenen Filterrohr 11 und einem mit der Trägerwelle 4 formschlüssig verbundenen, hohlzylindrischen Stützkörper 12, auf den das Filterrohr 11 aufgeschrumpft ist. Das siebförmige Filterrohr 11 kann z.B. aus einem mit den Durchgangsöffnungen 10 versehenen Stahlblech gefertigt sein, das zu einem Rohr gebogen und anschließend verschweist wird. Es wird zweckmäßigerweise aus einem verschleißfesten und korrrosionbeständigen Stahl hergestellt und gehärtet. Das Filterrohr kann auch mit Oberflächenbeschichtungen versehen werden, durch welche die Verschleißfestigkeit und sonstige Eigenschaften verbessert werden. Die Durchgangsöffnungen 10 sind als Bohrungen mit einem sich in Strömungsrichtung erweiternden Querschnitt ausgeführt. Bei dem in Figur 5 gezeigten Ausführungsbeispiel weisen die Durchgangsöffnungen 10 einen sich nach außen konisch verjüngenden Querschnitt auf. Der hohlzylindrische Stützkörper 12 hat an seiner Außenseite mehrere als umlaufende Nut oder Flachgewinde ausgeführte Sammelkanäle 13, von denen mehrere in Umfangsrichtung gleichwinklig beabstandete radiale Abströmbohrungen 14 nach innen führen.

Wie aus den Figuren 1 und 2 hervorgeht, münden die radialen Abströmbohrungen 14 in axiale Sammelschlitze 15, die innerhalb der Trägerwelle 4 in gleichen Winkelabständen wie die Abströmbohrungen über den Umfang des erweiterten Aufnahmeteils 6 verteilt angeordnet sind und einen Innenraum zum Sammeln des gefilterten Materials bilden. Die sich in Strömungsrichtung erweiternden Sammelschlitze 15 führen zu einem zentralen Sammelkanal 16, der über einen schrägen Abschnitt in einen ersten Ringkanal 17 innerhalb des Gehäuses 1 mündet. Von dem ersten Ringkanal 17 führt eine erste seitliche Bohrung innerhalb des Gehäuses 1 zu einer Austrittsöffnung 18 eines Anschlußstutzens 19. In dem Anschlußstutzen 19 befindet sich auch eine Eintrittsöffnung 20, die über eine zweite seitliche Bohrung innerhalb des Gehäuses 1 zu einem zweiten Ringkanal 21 im Gehäuse 1 führt. Dieser Ringkanal 21 steht mit einem Ringraum 22 in Verbindung, der zwischen der Innenwand des Gehäuses 1 und der Außenwand des Filterrohres 11 begrenzt wird.

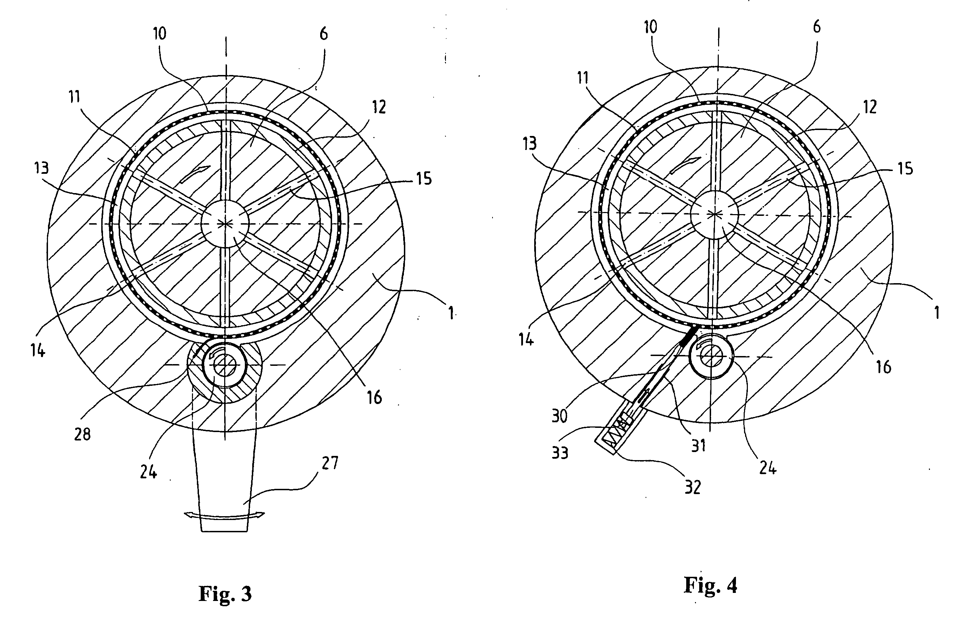

Wie aus Figur 2 hervorgeht, ist in dem unteren Teil des Gehäuses 1 ein in Axialrichtung über die gesamte Länge des Filterrohres verlaufender und an dessen Außenseite anliegender Abstreifer in Form eines Schabemessers 23 derart angeordnet, daß die am Filterkörper 2 zurückgehaltenen Rückstände oder Verunreinigungen in radialer Richtung abgeführt werden. Das Schabemesser 23 ist schräg zur Außenfläche des Filterkörpers 2 und zu dessen Drehrichtung hin geneigt angeordnet. Bei der dargestellten Ausführung ist das Schabemesser unter einem Anstellwinkel α im Bereich von 45° zu einer Mittelebene 40 des Filterrohres 11 angeordnet. In unmittelbarer Nähe des Schabemessers 23 ist innerhalb des Gehäuses 1 eine zur Drehachse 3 des Filterkörpers 2 parallele Förderschnecke 24 angeordnet, die an der Außenseite des Filterkörpers entlang bis zu einer Austrittsöffnung führt. Die Förderschnecke ist so angeordnet, daß die durch das Schabemesser 23 radial abgestreiften Rückstände unmittelbar an die Förderschnecke 24 übergeben und von dieser in Richtung des Pfeils 25 von Figur 1 nach außen abtransportiert wird. Bei der in Figur 2 gezeigten Ausführung ist das Schabemesser an einer die Förderschnecke 24 umgebenden und innerhalb des Gehäuses 1 drehbar angeordneten Hohlwelle 26 befestigt, die über einen Verstellhebel 27 drehbar ist. Dadurch kann der Anstellwinkel α und die Anpreßkraft des Schabemessers 23 verändert werden. Der Abstreifer kann aber auch in Form einer federnden Klinge 28 ausgeführt sein, wie dies in Figur 3 gezeigt ist. In der Hohlwelle 26 sind im Bereich des Materialaustritts der Förderschnecke 24 Kühlkanäle 29 vorgesehen. Über diese kann eine Kühlung des durch die Förderschnecke 24 abtransportierten Materials erreicht werden, um eine thermische Sperre zu bilden.

Der Abstreifer kann auch in einer vorgegebenen Winkelstellung im Gehäuse 1 montiert sein, wie dies in Figur 4 gezeigt ist. Dort ist eine Klinge oder ein Schabemesser 30 in einer schrägen Bohrung 31 im Gehäuse 1 verschiebbar geführt und wird durch einen mittels einer Feder 32 oder Hydraulikzylinder beaufschlagten Führungsbolzen 33 an die Außenseite des Filterrohres 11 angedrückt.

An dem Anschlußstutzen 19 sind im Bereich der Eintrittsöffnung 20 ein eingangsseitiger Massedruckaufnehmer 35 und im Bereich der Austrittsöffnung 18 ein ausgangsseitiger Massedruckaufnehmer 34 vorgesehen. Diese sind an eine Regelelektronik 36 zur Steuerung der Filtervorrichtung angeschlossen. Über die Regelelektronik 36 kann so z.B. die Drehbewegung des Schmelzefilters 2 und der Förderschnecke 24 in Abhängigkeit von einem erfaßten Differenzdruck gesteuert werden. Dadurch ist es möglich, Schmelzefilter 2 und Förderschnecke 24 entsprechend zweier vorgegebener Druckwerte (max-min) intermittierend drehen zu lassen und so den Verschleiß zu reduzieren. Zwischen der Eintrittsöffnung 20 und der Austrittsöffnung 18 ist ein durch den Anschlußstutzen 19 und das Gehäuse 1 verlaufender Drainagekanal 41 angeordnet. Dadurch kann verhindert werden, daß Fremdstoffanteile über die Lagerstelle auf die Gutseite gelangen.

In Figur 6 ist ein weiteres Ausführungsbeispiel eines einfach herstellbaren und kostengünstigen Filters gezeigt, der für eine Filtervorrichtung geeignet ist, bei der die Strömungsrichtung nicht von außen nach innen, sondern von innen nach außen erfolgt. Dort ist das Filterohr 11 an der Innenseite des Stützkörpers 12 angeordnet und weist sich nach radial außen erweiternde Durchgangsöffnungen 10 auf. Bei diesem Stützkörper 12 sind die umlaufenden Sammelkanäle 13 an der Innenseite und die Abströmbohrungen 14 an der Außenseite angeordnet. Sowohl bei dieser Ausführung als auch bei der Ausführung von Figur 5 sind zwischen den Sammelkanälen 13 dünne Stege 39 zur Abstützung des Filterrohres 11 vorgesehen.

Bei der vorstehend beschriebenen Vorrichtung wird das verunreinigte Materialgemisch (vorwiegend plastische Kunststoffinasse) gemäß Figur 1 an der Eintrittsöffnung 20 in Richtung des Pfeils 37 unter Druck in den Ringraum 22 und durch die feinen Durchgangsöffnungen 10 im Filterrohr 11 des rotierenden Filters 2 gepreßt. Das gefilterte Material gelangt über das Filterrohr 11 und den Stützkörper 12 mit den Sammelrillen 13 und den Abströmbohrungen 14 über die Trägerwelle 6 zu der Austrittsöffnung 18 und kann dort in Pfeilrichtung 38 entnommen werden. Die am Filterrohr 11 zurückgehaltenen Rückstände werden durch den Abstreifer 23 bei der Drehung des Filterohres 11 abgehoben und unmittelbar an die rotierende Förderschnecke 24 weitergegeben ohne das Filter weiter zu berühren. Die Rückstände werden dann von der Förderschnecke zu einem Ausgang transportiert und können dort in Pfeilrichtung 25 abgegeben werden.

Die Erfindung ist nicht auf das vorstehend beschriebene Ausführungsbeispiel beschränkt. So kann eine Filterung z.B. auch mit einer von innen nach außen gerichteten Strömungsrichtung erfolgen.

## Patentansprüche

1. Vorrichtung zum kontinuierlichen Filtern von Materialgemischen, insbesondere zur Abtrennung von Verunreinigungen aus Kunststoffschmelzen, mit einem innerhalb eines Gehäuses (1) angeordneten hohlzylindrischen Filter (2), einem innerhalb des Filters (2) angeordneten Innenraum (15), einem von der Außenseite des Filters (2) und einer Innenwand des Gehäuse (1) begrenzten Ringraum (22) und einer Reinigungseinrichtung (23, 24) zur Entfernung der am Filter (2) zurückgehaltenen Verunreinigungen, wobei das Filter (2) innerhalb des Gehäuses (1) um eine Achse (3) motorisch drehbar angeordnet ist, **dadurch gekennzeichnet, daß** die Reinigungseinrichtung (23, 24) mindestens einen Abstreifer (23, 28, 30) zur Entfernung der am Filter (2) zurückgehaltenen Verunreinigungen in radialer Richtung und eine Fördervorrichtung (24) zum Abtransport der durch den Abstreifer (23, 28, 30) vom Filter (2) entfernten Verunreinigungen enthält, wobei das motorisch drehangetriebene Filter (2) und die Fördervorrichtung (24) getrennt antreibbar sind.

2. Vorrichtung nach Anspruch 1, **dadurch gekennzeichnet, daß** der Abstreifer (23, 28, 30) schräg zum Filter (2) angeordnet ist.

3. Vorrichtung nach Anspruch 1 oder 2, **dadurch gekennzeichnet, daß** der Abstreifer (23, 28, 30) mit einem Anstellwinkel (α) zu einer Mittelebene (40) des Filters (2) angeordnet ist.

4. Vorrichtung nach Anspruch 3, **dadurch gekennzeichnet, daß** der Anstellwinkel (α) des Abstreifers (23, 28, 30) veränderbar ist.

5. Vorrichtung nach einem der Ansprüche 1 bis 4, **dadurch gekennzeichnet, daß** der Abstreifer (23, 28, 30) an einer innerhalb des Gehäuses (1) drehbar angeordneten Welle (26) angeordnet ist.

6. Vorrichtung nach einem der Ansprüche 1 bis 5, **dadurch gekennzeichnet, daß** die Fördervorrichtung (24) eine zur Drehachse (3) des Filters (2) parallel versetzte und motorisch angetriebene Förderschnecke ist.

7. Vorrichtung nach Anspruch 6, **dadurch gekennzeichnet, dass** die Drehzahl des Filters (2) und die Drehzahl der Förderschnecke (24) getrennt steuerbar sind.

8. Vorrichtung nach einem der Ansprüche 1 bis 7, **dadurch gekennzeichnet, daß** der Abstreifer (23, 28, 30) in unmittelbarer Nähe der Förderschnecke (24) angeordnet ist.

9. Vorrichtung nach einem der Ansprüche 1 bis 8, **dadurch gekennzeichnet, daß** das Filter (2) ein durch einen Stützkörper (12) abgestütztes Filterohr (11) mit einer Vielzahl sich in Strömungsrichtung erweiternden Durchgangsöffnungen (10) umfaßt.

10. Vorrichtung nach Anspruch 9, **dadurch gekennzeichnet, daß** der Stützkörper (12) mehrere umlaufende Sammelnuten (13) mit dazwischen angeordneten schmalen Stegen (39) zur Abstützung des Filterohrs (11) enthält.

11. Vorrichtung nach einem der Ansprüche 1 bis 10, **dadurch gekennzeichnet, daß** das Filter (2) auf einer im Gehäuse (1) drehbar angeordneten Trägerwelle (4) abnehmbar gehalten ist.

12. Vorrichtung nach Anspruch 11, **dadurch gekennzeichnet, daß** die Trägerwelle (4) mehrere Sammelschlitze (15) aufweist, die den Innenraum bilden.

13. Vorrichtung nach einem der Ansprüche 1 bis 12, **dadurch gekennzeichnet, daß** der Abstreifer ein mittels einer Feder (32) an das Filter (2) angedrücktes Schabemesser (23) ist.

14. Vorrichtung nach einem der Ansprüche 1 bis 12, **dadurch gekennzeichnet, daß** der Abstreifer eine federnde Klinge (28) ist.

15. Vorrichtung nach einem der Ansprüche 6 bis 14, **dadurch gekennzeichnet, daß** das Filter (2) und die Förderschnecke (24) gleiche oder entgegengesetzte Drehrichtungen aufweisen.

## Claims

1. Device for continuous filtration of material mixtures, in particular for separating impurities from plastic melts, with a hollow cylindrical filter (2) arranged inside a housing (1), an internal chamber (15) arranged inside the filter (2), an annular chamber (22) bounded by the outside of the filter (2) and an internal wall of the housing (1), and a cleaning device (23, 24) for removing the impurities retained on the filter (2), in which the filter (2) is arranged inside the housing (1) so as to be rotatable by motor about an axis (3), **characterised in that** the cleaning device (23, 24) comprises at least one scraper (2.3, 28, 30) for removing the impurities retained on the filter (2) in the radial direction and a conveying device (24) for carrying away the impurities removed from the filter (2) by the scraper (23, 28, 30), the filter (2) driven in rotation by motor and the conveying device (24) being drivable separately.

2. Device according to claim 1, **characterised in that** the scraper (23, 28, 30) is arranged at an oblique angle to the filter (2).

3. Device according to claim 1 or 2, **characterised in that** the scraper (23, 28, 30) is arranged at an angle of attack (α) Lo a median plane (40) of the filter (2).

4. Device according to claim 3, **characterised in that** the angle of attack (α) of the scraper (23, 28, 30) is variable.

5. Device according to one of claims 1 to 4, **characterised in** the scraper (23, 28, 30) is arranged on a shaft (26) arranged so as to be rotatable inside the housing (1).

6. Device according to one of claims 1 to 5, **characterised in that** the conveying device (24) is a conveying screw which is offset parallel to the axis of rotation (3) of the filter (2) and driven by motor.

7. Device according to claim 6, **characterised in that** the rotational speed of the filter (2) and the rotational speed of the conveying screw (24) can be controlled separately.

8. Device according to one of claims 1 to 7, **characterised in that** the scraper (23, 28, 30) is arranged in the immediate vicinity of the conveying screw (24).

9. Device according to one of claims 1 to 8, **characterised in that** the filter (2) comprises a filter pipe (11) which is supported by a supporting assembly (12) with a plurality of through-openings (10) which widen in the direction of flow.

10. Device according to claim 9, **characterised in that** the supporting assembly (12) comprises a plurality of circumferential collecting slots (13) with narrow strips (39) arranged between them to support the filter pipe (11).

11. Device according to one of claims 1 to 10, **characterised in that** the filter (2) is held detachably on a carrier shaft (4) which is arranged so as to be rotatable in the housing (1).

12. Device according to claim 11, **characterised in that** the carrier shaft (4) exhibits a plurality of collecting slits (15) which form the internal chamber.

13. Device according to one of claims 1 to 12, **characterised in that** the scraper is a scraping knife (23) which is pressed against the filter (2) by means of a spring (32).

14. Device according to one of claims 1. to 12, **characterised in that** the scraper is a sprung blade (28).

15. Device according to one of claims 6 to 14, **characterised in that** the filter (2) and the conveying screw (24) have the same or opposite directions of rotation.

## Revendications

1. Système pour filtrer en continu des mélanges de matières, en particulier pour séparer les impuretés des matières synthétiques fondues, avec un filtre (2) cylindrique creux disposé au sein d'un boîtier (1), un espace intérieur (15) disposé au sein du filtre (2), un espace annulaire (22) limité par le côté extérieur du filtre (2) et une paroi interne du boîtier (1), et un dispositif de nettoyage (23, 24) pour éliminer les impuretés retenues sur le filtre (2), le filtre.(2) étant disposé au sein du boîtier (1) de manière à pivoter au moyen d'un moteur autour d'un axe (3), **caractérisé en ce que** le dispositif de nettoyage (23, 24) contient au moins une racle (23, 28, 30) pour éliminer les impuretés retenues sur le filtre (2) dans le sens radial et un dispositif de transport (24) pour transporter les impuretés retirées par la racle (23, 28, 30) du filtre (2), le filtre (2) entrainé par rotation au moyen d'un moteur et le dispositif de transport (24) pouvant être entraînés séparément.

2. Système selon la revendication 1, **caractérisé en ce que** la racle (23, 28, 30) est disposée obliquement vers le filtre (2).

3. Système selon la revendication 1 ou 2, **caractérisé en ce que** la racle (23, 28, 30) est disposée à un angle d'inclinaison (α) vers un plan médian (40) du filtre (2).

4. Système selon la revendication 3, **caractérisé en ce que** l'angle d'inclinaison (α) de la racle (23, 28, 30) peut être modifié.

5. Système selon l'une quelconque des revendications 1 à 4, **caractérisé en ce que** la racle (23, 28, 30) est disposée sur un arbre (26) disposé de manière rotative au sein du boîtier (1).

6. Système selon l'une quelconque des revendications 1 à 5, **caractérisé en ce que** le dispositif de transport (24) est une vis sans fin décalée parallèlement à l'axe de rotation (3) du filtre (2) et entraînée au moyen d'un moteur.

7. Système selon la revendication 6, **caractérisé en ce que** la vitesse de rotation du filtre (2) et la vitesse de rotation de la vis sans fin (24) peuvent être commandées séparément.

8. Système selon l'une quelconque des revendications 1 à 7, **caractérisé en ce que** la racle (23, 28, 30) est disposée à proximité immédiate de la vis sans fin (24).

9. Système selon l'une quelconque des revendications 1 à 8, **caractérisé en ce que** le filtre (2) comprend un tube-filtre (11) soutenu par un corps d'appui (12) avec une multitude d'ouvertures débouchantes (10) s'étendant dans le sens d'écoulement.

10. Système selon la revendication 9, **caractérisé en ce que** le corps d'appui (12) contient plusieurs rainures collectrices (13) circulaires avec d'étroites traverses (39) disposées entre celles-ci pour soutenir le tube-filtre (11).

11. Système selon l'une quelconque des revendications 1 à 10, **caractérisé en ce que** le filtre (2) est maintenu de manière amovible sur un arbre porteur (4) disposé de manière rotative dans le boîtier (1).

12. Système selon la revendication 11, **caractérisé en ce que** l'arbre porteur (4) présente plusieurs fentes collectrices (15) qui forment l'espace intérieur.

13. Système selon l'une quelconque des revendications 1.à 12, **caractérisé en ce que** la racle est un grattoir (23) pressé contre le filtre (2) au moyen d'un ressort (32).

14. Système selon l'une quelconque des revendications 1 à 12, **caractérisé en ce que** la racle est une lame (28) à ressort.

15. Système selon l'une quelconque des revendications 6 à 14, **caractérisé en ce que** le filtre (2) et la vis sans fin (24) présentent des sens de rotation identiques ou contraires.
